(19) Europäisches Patentamt
European Patent Office
Office européen des brevets

(11) **EP 1 981 225 A1**

(12) **EUROPEAN PATENT APPLICATION**

(43) Date of publication:
**15.10.2008 Bulletin 2008/42**

(51) Int Cl.:
***H04L 12/56*** (2006.01)

(21) Application number: **08154478.5**

(22) Date of filing: **14.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.04.2007 KR 20070036253**

(71) Applicant: **Samsung Electronics Co., Ltd.**
**Suwon-si, Gyeonggi-Do (KR)**

(72) Inventors:
• **Park, Eun-Chan**
**Gyeonggi-do (KR)**
• **Kim, Han-Seok**
**Seoul (KR)**
• **Kim, Jae-Young**
**Gyeonggi-do (KR)**

(74) Representative: **Grünecker, Kinkeldey, Stockmair & Schwanhäusser Anwaltssozietät Leopoldstrasse 4 80802 München (DE)**

(54) **Apparatus and method for uplink bandwidth request in broadband wireless access system**

(57) An UpLink (UL) bandwidth requesting apparatus and method in a broadband wireless access system are provided. The apparatus includes a queue length controller for determining an amount of bandwidth-request using a difference between a current queue length and a target length and a determiner for the final amount of bandwidth-request using a change rate of queue length for sending information of the calculated bandwidth-request amount to a bandwidth allocating apparatus. By rapidly and accurately predicting the bandwidth-request and reducing the request delay, Quality of Service (QoS) can be guaranteed using a minimum bandwidth.

FIG.2

**Description**

<u>PRIORITY</u>

This application claims the benefit under 35 U.S.C. § 119(a) of a Korean patent application filed in the Korean Intellectual Property Office on April 13, 2007 and assigned Serial No. 2007-36253, the entire disclosure of which is hereby incorporated by reference.

<u>BACKGROUND OF THE INVENTION</u>

1. Field of the Invention:

The present invention relates generally to an apparatus and a method for an UpLink (UL) bandwidth request in a broadband wireless access system. More particularly, the present invention relates to an apparatus and a method for ensuring Quality of Service (QoS), assuring delay requirement and efficiently requesting a desired UL, bandwidth using a fast and accurate estimation of the desired bandwidth in consideration of both a queue length and a change rate of queue length.

2. Description of the Related Art:

The Institute of Electrical and Electronics Engineers (IEEE) 802.16e standard classifies services based on service requirements such as transmission delay time, jitter, and minimum required data rate, and defines several schemes for scheduling and UpLink (UL) bandwidth request/allocation to meet the Quality of Service (QoS) requirements for different classes of service.

An example of a scheduling scheme is the Unsolicited Grant Service (UGS). According to the UGS scheme, a base station allocates a fixed-sized bandwidth to a subscriber station on a periodic basis without a request from the subscriber station. The UGS scheme is typically used for applications such as Voice over Internet Protocol (VoIP)

An example of a bandwidth requesting and scheduling scheme is the real-time Polling Service (rtPS). In the rtPS scheme, a base station periodically polls a subscriber station by granting a bandwidth-request opportunity. The subscriber station responds by requesting a bandwidth from the base station at an amount to support the desired service of the subscriber station. And then the base station assigns the bandwidth to the subscriber station. The rtPS scheme is typically used as a requesting and scheduling scheme for an application that generates variable-sized packets on a periodic basis, such as a video streaming application.

An extended rtPS (ertPS), which is newly defined by the IEEE 802.16e, is a bandwidth request/allocation scheme that combines the advantages of the UGS and the rtPS. In the ertPS scheme, the base station assigns a fixed-sized bandwidth to the subscriber station at periodic intervals without a request from the subscriber station. The base station can increase or decrease the amount of the allocated bandwidth according to a request received from the subscriber station. Thus, the ertPS is suitable for real-time applications generating a variable data rate, for example, VoIP service with silence suppression or multimedia service. Compared to the UGS scheme, the ertPS scheme provides more efficient bandwidth utilization. And compared to the rtPS scheme, the ertPS scheme provides the bandwidth request in a piggyback manner without polling for the bandwidth request and thus reduces transmission delay.

In addition to the bandwidth request/allocation schemes for the non-real-time application, a non-real-time Polling Service (nrtPS) requests the bandwidth through the polling to ensure the minimum required data rate and a Best Effort (BE) does not have any service requirements.

As discussed above, the IEEE 802.16e standard defines the ertPS scheduling mechanism for efficient UL bandwidth request/allocation for variable-rate real-time traffic. However, the standard does not define a specific algorithm for bandwidth-request adaptation.

<u>SUMMARY OF THE INVENTION</u>

An aspect of the present invention is to address at least the above mentioned problems and/or disadvantages and to provide at least the advantages described below. Accordingly, an aspect of the present invention is to provide an apparatus and a method for an UpLink (UL) bandwidth request in a broadband wireless access system.

Another aspect of the present invention is to provide an apparatus and a method for satisfying Quality of Service (QoS) while minimizing delay violation probability and efficiently requesting a UL bandwidth in a broadband wireless access system.

Yet another aspect of the present invention is to provide an apparatus and a method for determining a proper amount of bandwidth-request using a queue length and a change rate of queue length in an extended real-time Polling Service (ertPS) scheme of a broadband wireless access system.

In accordance with an aspect of the present invention, a UL bandwidth requesting apparatus in a broadband wireless access system is provided. The apparatus includes a queue length controller for calculating an amount of bandwidth-request using a difference between a current queue length and a target queue length, and a determiner for the final amount of bandwidth-request a final amount of bandwidth-request based on a change rate of queue length.

In accordance with another aspect of the present invention, a UL bandwidth requesting method in a broadband wireless access system is provided. The method includes calculating an amount of bandwidth-request using a difference between a current queue length and a target queue length and sending information of the calculated bandwidth-request amount to a bandwidth allocating apparatus.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features and advantages of certain exemplary embodiments the present invention will become more apparent from the following description taken in conjunction with the accompanying drawings, in which:

FIG. 1 is a block diagram illustrating an apparatus for requesting an UpLink (UL) bandwidth and an apparatus for allocating a UL bandwidth in a broadband wireless access system according to an exemplary embodiment of the present invention;

FIG. 2 is a flowchart illustrating a method of requesting a UL bandwidth according to an exemplary embodiment of the present invention;

FIG. 3 is a flowchart illustrating a method of allocating a UL bandwidth according to an exemplary embodiment of the present invention;

FIGs. 4A to 4C are flowcharts illustrating various methods of calculating an amount of bandwidth-request according to exemplary embodiments of the present invention;

FIG. 5 is a graph for comparing a queue length variation between a conventional method and an exemplary algorithm of the present invention; and

FIG. 6 is a graph for comparing a packet arrival rate and a queue service rate according to an exemplary algorithm of the present invention.

Throughout the drawings, it should be noted that like reference numbers are used to depict the same or similar elements, features and structures.

## DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention provide an apparatus and a method for requesting an UpLink (UL) bandwidth in a broadband wireless access system. In the following examples, a bandwidth requesting apparatus is implemented in a subscriber station and a bandwidth allocating apparatus is implemented in a base station.

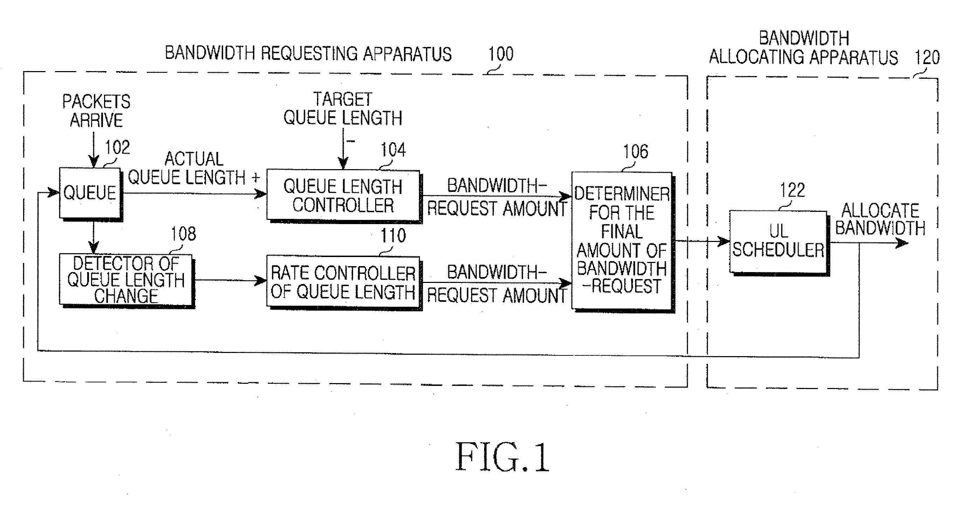

FIG. 1 is a block diagram illustrating an apparatus for requesting a UL bandwidth and an apparatus for allocating a UL bandwidth in a broadband wireless access system according to an exemplary embodiment of the present invention.

The bandwidth requesting apparatus 100 of FIG. 1 includes a queue 102, a queue length controller 104, a determiner for the final amount of bandwidth-request 106, a detector of queue length change 108, and a rate controller of queue length 110. The bandwidth allocating apparatus 120 includes a UL scheduler 122.

The queue 102 of the bandwidth requesting apparatus 100 queues incoming UL data. Because data transmission is limited by the bandwidth assigned to the subscriber station, the packets in the queue 102 are served only at the rate of the bandwidth assigned by the bandwidth allocating apparatus 120. The queue 102 outputs the queued data to a transmitter (not shown).

The queue length controller 104 monitors the current length of the queue 102 and determines an amount $y_q(t)$ of a bandwidth-request using a difference between a desired target or reference length $q_{ref}$ of the queue 102 and the observed actual length $q(t)$, i.e., $e_q(t) = q(t) - qref$, and outputs the determined amount of bandwidth-request to the determiner for the final amount of bandwidth-request 106. Herein, the amount of bandwidth-request indicates an increase or a decrease from the amount of a previous bandwidth-request. Otherwise, the amount of bandwidth-request may correspond to the whole amount of bandwidth required supporting the desired QoS.

The detector of queue length change 108 estimates a change rate $e_r(t) = a(t) - s(t)$ of the queue length 102. That is, the detector of queue length change 108 determines a difference between the packet arrival rate $a(t)$ and the service rate $s(t)$ and outputs the estimated change rate of queue length to the rate controller of queue length 110.

The rate controller of queue length 110 computes the amount of bandwidth-request in proportion to the change rate of queue length $e_r(t)$, and outputs the computed amount of bandwidth-request to the determiner for the final amount of bandwidth-request 106.

The determiner for the final amount of bandwidth-request 106 determines the amount of a final additional bandwidth-request by adding the amounts of the bandwidth-request provided from the queue length controller 104 and the rate controller of queue length 110, and sends information of the determined final bandwidth-request amount to the bandwidth allocating apparatus 120. Herein, the information of the final bandwidth-request amount can be transmitted by piggybacking on UL packets.

The UL scheduler 122 of the bandwidth allocating apparatus 120 receives the information of the final bandwidth-request amount from the bandwidth requesting apparatus 100, and assigns the bandwidth to the bandwidth requesting apparatus 100 using the received information through UL scheduling. Next, a data receiver (not shown) receives UL data using the assigned bandwidth.

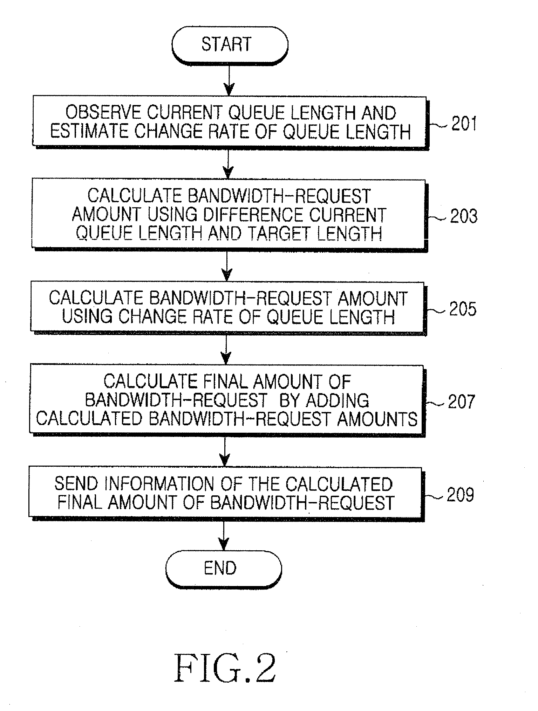

FIG. 2 is a flowchart illustrating a method of requesting a UL bandwidth according to an exemplary embodiment of the present invention.

In step 201, the bandwidth requesting apparatus observes the current queue length $q(t)$ and estimates the change rate $e_r(t)$ of the queue length by determining the difference between the packet arrival rate $a(t)$ and the service rate $s(t)$ of the queue. In step 203, the bandwidth requesting apparatus determines the amount $y_q(t)$ of the bandwidth-request using the current queue length $q(t)$ and the reference length $q_{ref}$. Herein, the bandwidth-request amount indicates an increase or a decrease of the amount from the previous bandwidth-request.

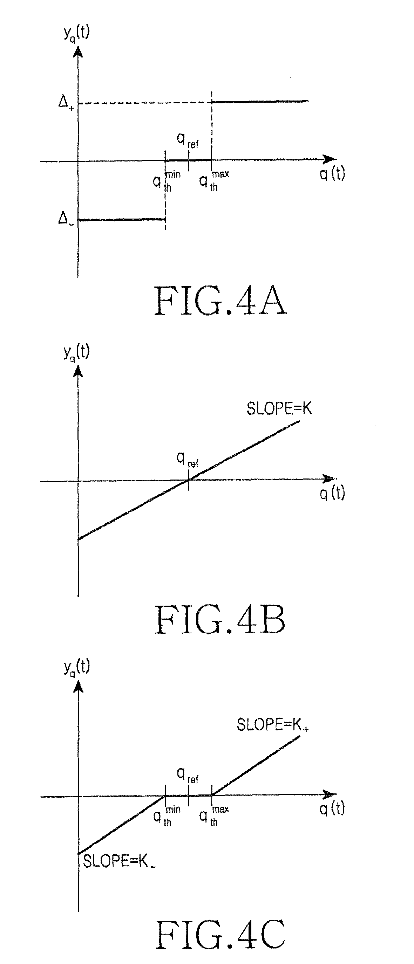

The bandwidth-request amount can be computed in various ways using the difference between the current queue length and the reference length. For example, as shown in FIG. 4A, a value greater than the reference length by a certain size is set to an upper threshold $q_{th}^{max}$ and a value smaller than the reference length by a certain size is set to a lower threshold $q_{th}^{min}$. When the current queue length is observed to exceed the upper threshold, the bandwidth requesting apparatus can request additional bandwidth of quantity $\Delta_+$. Here, $\Delta_+$ is a predefined design parameter. Similarly, when the current queue length falls below the lower threshold, the bandwidth requesting apparatus can request to decrease the bandwidth by $\Delta_-$ with respect to the previous bandwidth-request amount. Here, $\Delta_-$ is another design parameter. If the current queue length lies between the upper threshold and the lower threshold because there is little difference between the current queue length and the reference length, the bandwidth change is not requested.

Alternatively, the change in bandwidth can be requested in relation to the error or difference between the current queue length and the target queue length as shown in FIG. 4B. When the current queue length is greater than the reference length, for example when packets are stored in the queue because of insufficient bandwidth allocated to the subscriber station, additional bandwidth can be requested in proportion to the difference between the current queue length and the reference length. Similarly, when the current queue length is less than the reference length because of excessive bandwidth allocated to the subscriber station, a decrease of the bandwidth can be requested in proportion to the difference. Compared to FIG. 4A, the current queue length can be converged rapidly to the target length when there is a large discrepancy between the current queue length and reference length. It is also to be understood that, although FIG. 4B illustrates a linear relationship having slope K between a change in the bandwidth-request and the difference between the reference and current queue length, this is merely for example. That is, the relationship may be altered as well as being replaced by a non-linear function.

As shown in FIG. 4C, the bandwidth-request can also be determined by combining the methods af FIGs. 4A and 4B. As illustrated in FIG. 4C, the bandwidth request may be computed in proportion to the queue length error as discussed with reference to FIG. 4B. Also, when there is little difference between the current queue length and the target length, that is when the current queue length lies between the upper threshold and the lower threshold, no bandwidth change can be requested as discussed with reference to FIG. 4A. Thus, the current queue length can be converged rapidly to the target length while unnecessarily frequent bandwidth requests can be avoided.

However, using merely the queue length control, it is difficult to converge the current queue length rapidly to the reference length in response to the fast variation of the packet arrival rate. Therefore, exemplary embodiments of the present invention determine the amount of bandwidth-request through the additional control based on the change rate of queue length. More specifically, the bandwidth requesting apparatus determines the bandwidth-request amount $y_r(t)$ using the estimated change rate of queue length $e_r(t)$ in step 205.

The bandwidth-request amount can be computed in proportion to the change rate of queue length $e_r(t)$, which is expressed as Equation (1).

$$y_r(t) = g(e_r(t)) \qquad \ldots(1)$$

The function $g()$ can vary similar to that shown in FIGs. 4A to 4C. The change rate of queue length can be expressed as Equation (2).

$$e_r(t) = a(t) - s(t) = \frac{d}{dt}q(t) = \frac{d}{dt}e_q(t) \qquad \ldots(2)$$

In Equation (2), $a(t)$ indicates the queue input rate, that is, the packet arrival rate. Also in Equation (2), $s(t)$ indicates the service rate from the bandwidth allocating apparatus and $e_q(t)$ indicates the queue length error. That is, $e_q(t)$ indicates the difference between the actual queue length $q(t)$ and the reference length $q_{ref}$.

In step 207, the bandwidth requesting apparatus computes the final bandwidth-request amount $B(t)$ by adding the calculated bandwidth-request amounts $y_q(t)$ and $y_r(t)$.

The amount of the final additional bandwidth-request can be expressed as Equation (3).

$$B(t) = y_q(t) + y_r(t) \qquad \ldots(3)$$

In step 209, the bandwidth requesting apparatus sends information of the calculated final bandwidth-request amount to the bandwidth allocating apparatus. The final bandwidth-request amount information can be transmitted by piggybacking on UL packets. In the piggyback transmission, the bandwidth requesting apparatus can send the information of the calculated final bandwidth-request amount using an Extended Piggyback Bandwidth Request (EPBR) field of a grant management subheader of a Media Access Control (MAC) header.

Next, the bandwidth requesting apparatus finishes this process.

The exemplary UL bandwidth requesting algorithm of the present invention can be expressed as a general Proportional-Derivative (PD) controller for the queue length error $e_q(t)$ as in Equation (4). While the proportion control is based on the current queue length error, the derivative control is based on the change rate of queue length. The system is stabilized by promptly responding to the queue length change.

$$B(t) = f(e_q(t)) + g\left(\frac{d}{dt}e_q(t)\right) \qquad \ldots(4)$$

To implement the continuous-time controller of Equation (4) as a discrete-time controller, the derivative term can be approximated as in Equation (5).

$$\frac{d}{dt}e_q(t) = \frac{e_q[n] - e_q[n-1]}{T_a} \qquad \ldots(5)$$

In Equation (5), $T_a$ indicates a bandwidth allocation period. When the exemplary UL bandwidth requesting algorithm of the present invention is expressed as the general PD controller for the queue length error $e_q(t)$, the algorithm can be realized using only the information of the current queue length and the previous queue length.

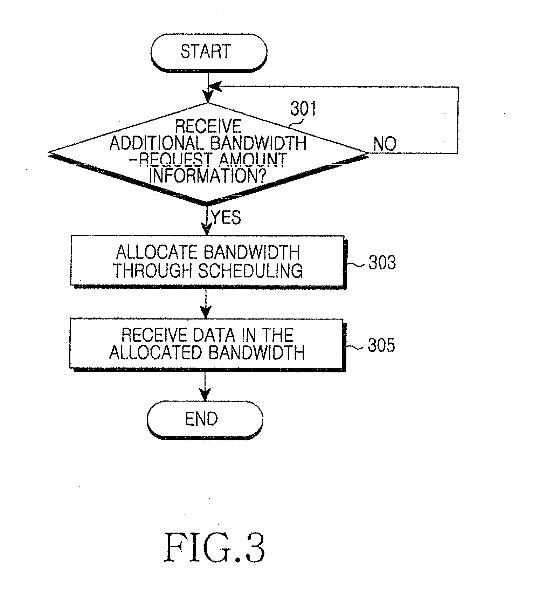

FIG. 3 is a flowchart illustrating a method of allocating a UL bandwidth according to an exemplary embodiment of the present invention.

In step 301, the bandwidth allocating apparatus determines whether the additional bandwidth-request amount information is received from the bandwidth requesting apparatus.

When receiving the additional bandwidth-request amount information, the bandwidth allocating apparatus assigns the previously allocated bandwidth and the bandwidth as additionally requested, to the bandwidth requesting apparatus through scheduling in step 303 and receives UL data from the bandwidth requesting apparatus over the allocated bandwidth in step 305.

Next, the bandwidth allocating apparatus finishes this process.

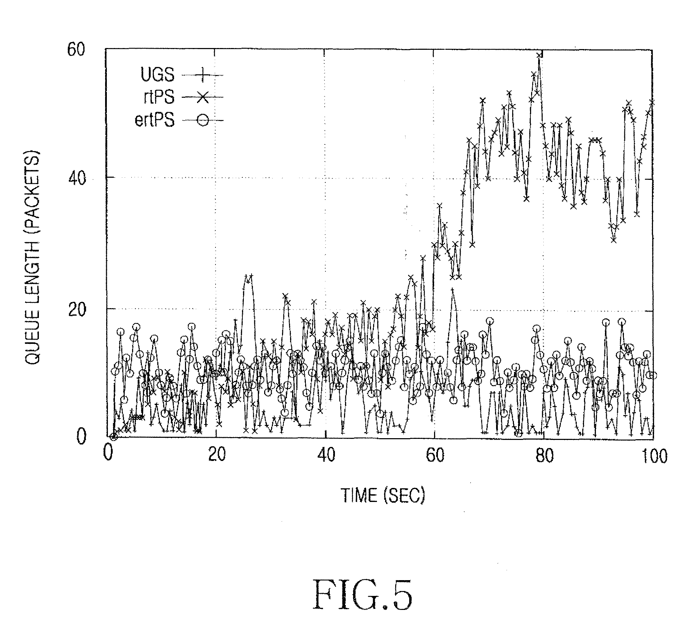

FIG. 5 is a graph for comparing a queue length variation between a conventional algorithm and an exemplary algorithm of the present invention. In experiments for the algorithm comparison, the input traffic is generated such that a packet is generated every 20 ms and its size is determined according to an exponential distribution with an average value of 500 bytes. With the MAC overhead considered, the average data rate of the input traffic is about 225kbps.

According to the conventional UGS algorithm in FIG. 5, the queue length is repeatedly increased and decreased based on the packet input rate variation. This may result in an increase of jitter. In the conventional rtPS algorithm, the queue length is unstable because of the time delay between packet arrival and bandwidth allocation by responding to the poll, during which the queue length may continue to increase up to the maximum buffer capacity. If the time delay is excessive and the number of packets received is greater than the maximum buffer capacity, packets may be lost. By contrast, in the exemplary ertPS algorithm of the present invention, the queue length is kept close to the reference value of 10 packets, as illustrated in FIG. 5. The exemplary ertPS algorithm of the present invention can regulate the queue length through the feedback based on the change rate of queue length.

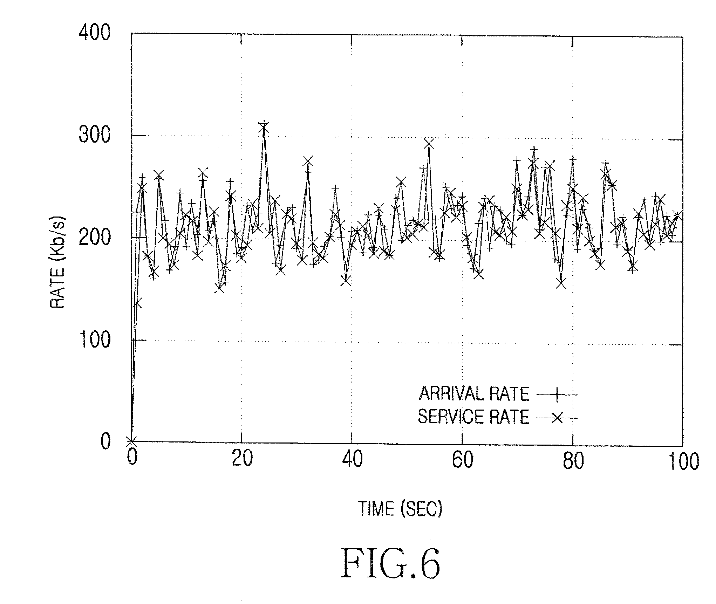

FIG. 6 is a graph for comparing a packet arrival rate and a queue service rate according to an exemplary algorithm of the present invention.

The queue service rate according to the resource allocation follows the arrival rate of the input packet well. Hence, as illustrated in FIG. 6, there is little difference in the two rates.

The exemplary ertPS algorithm of the present invention meets the desired QoS with the minimum resources. To prove this, when the average arrival rate of the packets is 225kbps in consideration of the MAC overhead and minimum reserved rates are 200kbps, 225kbps and 250kbps, the packet loss rate, the bandwidth waste rate, the average delay, and the jitter (calculated as the standard deviation of the delay) of the UGS, the rtPS, and the ertPS are compared as below.

Table 1 compares the performance in a well-provisioned case where the minimum reserved rate is 225kbps, Table 2 compares the performance in an under-provisioned case where the minimum reserved rate is 200kbps, and Table 3 compares the performance in an over-provisioned case where the minimum reserved rate is 250 kbps.

Table 1

| Algorithms | UGS | rtPS | ertPS |
|---|---|---|---|
| Packet loss rate (%) | 0 | 2.17 | 0 |
| Bandwidth waste (%) | 7.17 | 1.20 | 0.37 |
| Delay (ms) | 150.9 | 1843.6 | 212.7 |
| Jitter (ms) | 137.5 | 703.9 | 61.8 |

Table 2

| Algorithms | UGS | rtPS | ertPS |
|---|---|---|---|
| Packet loss rate (%) | 5.76 | 4.07 | 0 |
| Bandwidth waste (%) | 0.30 | 1.19 | 0.52 |
| Delay (ms) | 2002.5 | 1825.6 | 212.9 |
| Jitter (ms) | 770.0 | 681.5 | 64.8 |

Table 3

| Algorithms | UGS | rtPS | ertPS |
|---|---|---|---|
| Packet loss rate (%) | 0 | 2.54 | 0 |
| Bandwidth waste (%) | 15.38 | 1.20 | 0.45 |
| Delay (ms) | 85.8 | 1859.5 | 206.9 |
| Jitter (ms) | 73.0 | 670.5 | 60.9 |

In the under-provisioned case, the time delay drastically increases (greater than 13 times as compared to the well-provisioned case) and the packet loss rate is close to 6%, because the conventional UGS assigns a fixed-sized bandwidth. In the over-provisioned case, the packet loss and the time delay decrease, whereas the bandwidth waste rate reaches 15%. The conventional rtPS results in the considerable time delay and jitter regardless of the minimum reserved rate, and the packet loss rate is about several percentages. This is because the conventional rtPS cannot assign the bandwidth timely due to the polling delay when the bandwidth is requested based on the current queue length. By contrast, the ertPS according to exemplary embodiments of the present invention keeps the bandwidth waste below 0.5%, suffers no packet loss, and controls the time delay in the proximity of the target value (200ms), regardless of the bandwidth provisioning level. Also, the jitter is minimized compared to the other algorithms.

As set forth above, an exemplary broadband wireless access system of the present invention adopts a target or reference value of the queue length, calculates a UL bandwidth-request amount in proportion to the difference between the current queue length and the target length, calculates a UL bandwidth-request amount in proportion to not only the queue length but the change rate of queue length, and then determines the amount of the final bandwidth-request using these two terms. Therefore, the queue length can be quickly converged to the target value. Exemplary methods of the present invention can reduce the jitter due to the queuing delay and control the queuing delay by setting the target length. Even when characteristics of the input traffic or the radio channel rapidly vary, the exemplary method requests the bandwidth by quickly and accurately predicting the amount of required bandwidth. Thus, with the minimum bandwidth, the QoS can be guaranteed, the unnecessary bandwidth waste can be minimized, and the radio resources can be utilized efficiently. Further, exemplary embodiments of the present invention are flexibly applicable based on the condition of the application or the system. For instance, in a rapidly changing system, a greater weight is applied to the term which is proportional to the change rate of queue length. To regulate the time delay at an intended level or to minimize the jitter, a greater weight can be applied to the term which is proportional to the queue length.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1.   An UpLink (UL) bandwidth requesting apparatus in a wireless access system, comprising:

   a queue length controller for determining an amount of bandwidth-request using a difference between a current queue length and a target queue length; and
   a determiner for the final amount of bandwidth-request for sending information of the determined bandwidth-request amount to a bandwidth allocating apparatus.

2.   The UL bandwidth requesting apparatus of claim 1, further comprising:

   a detector of queue length change for estimating a change rate of queue length; and
   a rate controller of queue length for determining a amount of bandwidth-request in proportion to the estimated change rate of queue length,

   wherein the determiner for the final amount of bandwidth-request determines an amount of a bandwidth-request by adding the two bandwidth-request amounts and sends information of the determined final bandwidth-request amount to the bandwidth allocating apparatus.

3.   The UL bandwidth requesting apparatus of claim 2, wherein The detector of queue length change estimates the change rate of queue length using a difference between a packet arrival rate of the queue and a service rate.

4.   The UL bandwidth requesting apparatus of claim 1, wherein the bandwidth-request amount comprises at least one of an increase and a decrease from an amount of a previous bandwidth-request.

5.   The UL bandwidth requesting apparatus of claim 1, wherein the queue length controller sets a value greater than the target length by a certain value as an upper threshold, sets a value smaller than the target length by a certain value as a lower threshold, determines an additional bandwidth-request as a first preset size when the current queue length exceeds the upper threshold, and determines a reduced bandwidth-request as a second preset size when the current queue length falls below the lower threshold.

6.   The UL bandwidth requesting apparatus of claim 5, wherein the queue length controller determines the bandwidth-request as zero when the current queue length lies between the upper threshold and the lower threshold.

7. The UL bandwidth requesting apparatus of claim 1, wherein the queue length controller determines the bandwidth-request in proportion to an error between the current queue length and the target length.

8. The UL bandwidth requesting apparatus of claim 1, wherein, to determine the bandwidth-request in proportion to the error between the current queue length and the target length, the queue length controller sets a value greater than the target length by a certain value as an upper threshold, sets a value smaller than a target length by a certain value as a lower threshold, and determines the bandwidth-request as zero when the current queue length lies between the upper threshold and the lower threshold.

9. An UpLink (UL) bandwidth requesting method in a wireless access system, comprising:

   determining an amount of bandwidth-request using a difference between a current queue length and a target queue length; and
   sending information of the determined bandwidth-request amount to a bandwidth allocating apparatus.

10. The UL bandwidth requesting method of claim 9, further comprising:

   estimating a change rate of queue length;
   determining an amount of bandwidth-request in proportion to the estimated change rate of queue length; and
   determining an amount of a final additional bandwidth-request by adding the two bandwidth-request amounts,

   wherein the sending of the information to the bandwidth allocating apparatus comprises sending information of the determined final bandwidth-request amount to the bandwidth allocating apparatus.

11. The UL bandwidth requesting method of claim 10, wherein the estimating of the change rate of queue length comprises using a difference between a packet arrival rate of the queue and a service rate.

12. The UL bandwidth requesting method of claim 9, wherein the determining of the amount of bandwidth-request comprises at least one of increasing and decreasing an amount of a previous bandwidth-request.

13. The UL bandwidth requesting method of claim 9, wherein the determining of the bandwidth-request amount comprises:

   setting a value greater than the target length by a certain value as an upper threshold and setting a value smaller than the target length by a certain value as a lower threshold; and
   determining an additional bandwidth-request as a first preset size when the current queue length exceeds the upper threshold and determining a reduced bandwidth-request as a second preset size when the current queue length falls below the lower threshold,

   wherein the step of determining the bandwidth-request amount comprises:

   determining the bandwidth-request as zero when the current queue length lies between the upper threshold and the lower threshold.

14. The UL bandwidth requesting method of claim 9, wherein the determining of the bandwidth-request amount comprises determining the bandwidth-request in proportion to an error between the current queue length and the target length.

15. The UL bandwidth requesting method of claim 9, wherein the determining of the bandwidth-request in proportion to the error between the current queue length and the target length comprises setting a value greater than the target length by a certain value as an upper threshold, setting a value smaller than a target length by a certain value as a lower threshold, and determining the bandwidth-request as zero when the current queue length lies between the upper threshold and the lower threshold.

FIG.1

EP 1 981 225 A1

START

OBSERVE CURRENT QUEUE LENGTH AND
ESTIMATE CHANGE RATE OF QUEUE LENGTH — 201

CALCULATE BANDWIDTH-REQUEST
AMOUNT USING DIFFERENCE CURRENT
QUEUE LENGTH AND TARGET LENGTH — 203

CALCULATE BANDWIDTH-REQUEST AMOUNT
USING CHANGE RATE OF QUEUE LENGTH — 205

CALCULATE FINAL AMOUNT OF
BANDWIDTH-REQUEST BY ADDING
CALCULATED BANDWIDTH-REQUEST AMOUNTS — 207

SEND INFORMATION OF THE CALCULATED
FINAL AMOUNT OF BANDWIDTH-REQUEST — 209

END

FIG.2

START

RECEIVE
ADDITIONAL BANDWIDTH
-REQUEST AMOUNT
INFORMATION?                    301    NO

YES

ALLOCATE BANDWIDTH
THROUGH SCHEDULING          ~ 303

RECEIVE DATA IN THE
ALLOCATED BANDWIDTH         ~ 305

END

FIG.3

FIG.4A

FIG.4B

FIG.4C

FIG.5

EP 1 981 225 A1

FIG.6

EP 1 981 225 A1

**European Patent Office**

**EUROPEAN SEARCH REPORT**

Application Number

EP 08 15 4478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIYATO D ET AL: "Queue-aware uplink bandwidth allocation for polling services in 802.16 broadband wireless networks" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 6, 28 November 2005 (2005-11-28), pages 3702-3706, XP010881774 ISBN: 978-0-7803-9414-8 * the whole document * ----- | 1,9 | INV. H04L12/56 |
| X | EP 1 303 162 A (ALCATEL CANADA INC [CA]) 16 April 2003 (2003-04-16) * abstract * * page 4, line 8 - line 37 * * page 5, line 5 - page 6, line 27 * ----- | 1,9 | |
| X | JP 10 242981 A (FUJITSU LTD; NIPPON TELEGRAPH & TELEPHONE) 11 September 1998 (1998-09-11) * abstract * ----- | 1,9 | TECHNICAL FIELDS SEARCHED (IPC) H04L |

The present search report has been drawn up for all claims

| Place of search | Date of completion of the search | Examiner |
|---|---|---|
| Munich | 13 June 2008 | Lastoria, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 4478

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2008

| Patent document cited in search report | | Publication date | Patent family member(s) | | Publication date |
|---|---|---|---|---|---|
| EP 1303162 | A | 16-04-2003 | US | 2003095562 A1 | 22-05-2003 |
| JP 10242981 | A | 11-09-1998 | JP | 3490583 B2 | 26-01-2004 |

EPO FORM P0459

For more details about this annex : see Official Journal of the European Patent Office, No. 12/82

## EP 1 981 225 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200736253